Europäisches Patentamt

European Patent Office

Office européen des brevets

(19)

(11) Publication number: **0 511 561 A2**

# EUROPEAN PATENT APPLICATION

(21) Application number: **92106613.0**

(22) Date of filing: **16.04.92**

(51) Int. Cl.⁵: **H02H 5/04**

(30) Priority: **30.04.91 IT TO910320**

(43) Date of publication of application:
**04.11.92 Bulletin  92/45**

(84) Designated Contracting States:
**DE FR GB NL SE**

(71) Applicant: **SGS-THOMSON
MICROELECTRONICS s.r.l.**
**Via C. Olivetti, 2**
**I-20041 Agrate Brianza Milano(IT)**

(72) Inventor: **Marchio', Fabio**

Via S. Remigio, 6/b
I-20018 Sedriano(IT)
Inventor: **Pennisi, Alessio**
Via Alcuino, 5
I-20149 Milano(IT)
Inventor: **Rossi, Giorgio**
Via S. Isidoro, 4
I-20014 Nerviano(IT)

(74) Representative: **Cerbaro, Elena et al**
c/o Studio Torta, Via Viotti 9
I-10121 Torino(IT)

(54) **Thermal protective device.**

(57) A thermal protective device comprising a band-gap voltage source (11) and a comparator (12). The voltage source (11) presents two output terminals (15, 16) at which are respectively present a temperature-stable voltage ($V_{REF}$) and a voltage ($V_2$) increasing with temperature. Below a predetermined temperature value, the variable voltage is lower than the stable voltage; but, when the ambient temperature reaches a predetermined value, both voltages are equal. The above voltages are supplied to the input of the comparator (12), the output of which supplies a maximum permissible temperature signal, when the variable voltage equals the temperature-stable voltage.

Fig. 2

EP 0 511 561 A2

The present invention relates to a thermal protective device.

Thermal protective devices are usually employed for protecting circuits comprising power components, by detecting the temperature of the circuit, and, at a given temperature, generating an output signal to turn off the power transistors and so reduce the temperature of the circuit to within a given safety value.

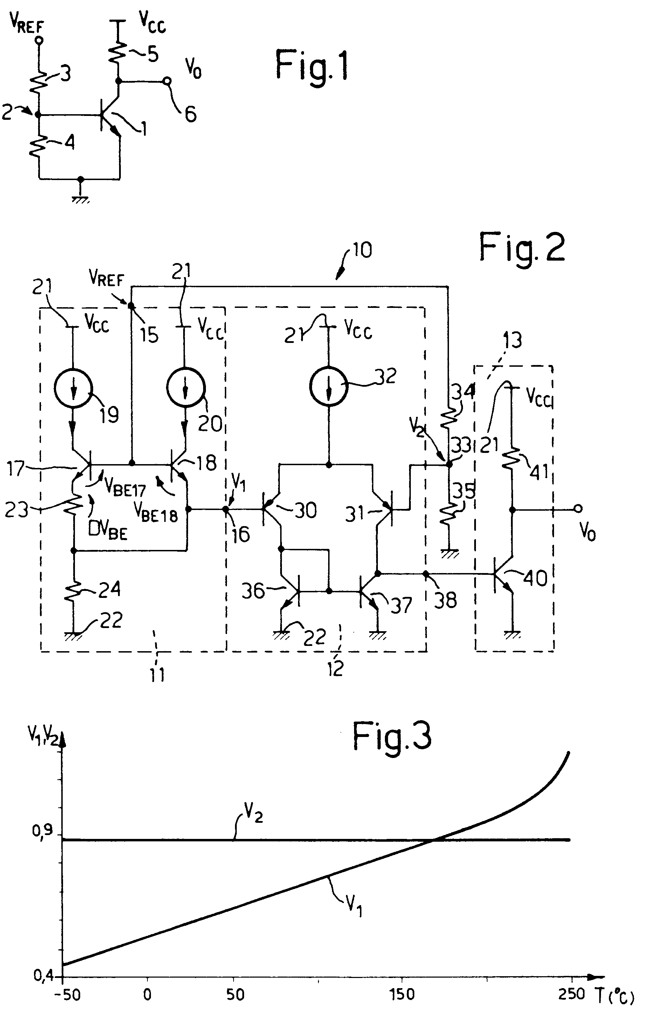

The most commonly used thermal protective devices at present are based on the fact that the base-emitter voltage drop of bipolar transistors varies with temperature. Fig.1 shows a schematic diagram of a known device of this type, comprising a bipolar transistor 1, the base terminal of which is connected to the mid point 2 of a voltage divider consisting of resistors 3, 4 connected between a temperature-stable reference voltage $V_{REF}$ and ground. The emitter terminal of transistor 1 is grounded, and the collector terminal connected to supply line $V_{CC}$ via resistor 5. The collector terminal of the transistor defines the device output 6, at which is present a digital signal indicating the maximum permissible temperature.

Resistors 3, 4 and reference voltage $V_{REF}$ are so selected that the voltage ($V_2$) at point 2 is normally lower than the base-emitter voltage drop $V_{BEon}$ at which transistor 1 is turned on ($V_2 < V_{BEon}$). When this is so, transistor 1 is off, and output voltage $V_o$ equals supply voltage $V_{CC}$ (high logic value). The base-emitter voltage drop $V_{BEon}$ at which the bipolar transistor is turned on, however, decreases alongside an increase in temperature, so that, when a given temperature is reached (depending on the sizing of resistors 3, 4 and $V_{REF}$ as described above), $V_{BEon}$ equals voltage $V_2$, thus turning on transistor 1 and switching output 6 to low (close to ground).

A drawback of the above known circuit is the impossibility of accurately determining the switch temperature of output 6, which depends on:

a) the accuracy of reference voltage $V_{REF}$;

b) the accuracy of resistors 2, 3;

c) the spread of the base-emitter voltage drop due to the manufacturing process, which may be as much as ±30 mV (corresponding to ± 15°C on the output signal switch threshold).

It is an object of the present invention to provide a thermal protective device designed to overcome the drawbacks associated with known devices, and which, in particular, is unaffected by process spread.

According to the present invention, there is provided a thermal protective device as claimed in Claim 1.

A preferred, non-limiting embodiment of the present invention will be described by way of example with reference to the accompanying drawings, in which:

Fig.1 shows a simplified electric diagram of a known device;

Fig.2 shows a simplified electric diagram of one embodiment of the device according to the present invention;

Fig.3 shows a voltage-temperature graph of two voltages in the Fig.2 circuit.

Number 10 in Fig.2 indicates a thermal protective device substantially comprising a voltage source 11, a comparator 12, and an output stage 13.

Source 11 presents two output terminals defined by points 15 and 16, at which are respectively present a temperature-stable reference voltage $V_{REF}$, and a voltage $V_1$ varying with temperature. Source 11 specifically consists of a so-called "band-gap" circuit, and, in the embodiment shown, comprises two NPN transistors 17, 18 with a definite area ratio, and with mutually connected bases defining output terminal 15; the collectors connected to supply $V_{CC}$ (first reference potential line 21) via respective current sources 19 20; and the emitters connected together and to ground (second reference potential line 22). The common point of the two emitters, defining output terminal 16, is defined by the emitter of transistor 18, and is connected via resistor 23 to the emitter of transistor 17, and grounded via a further resistor 24.

Comparator 12 comprises two PNP transistors 30, 31 having their emitter terminals connected together and to one terminal of a current source 32, the other terminal of which is connected to supply $V_{CC}$. The base terminal of transistor 30 is connected to output terminal 16 of source 11, while the base terminal of transistor 31 is connected to the mid point 33 of a voltage divider between output terminal 15 and ground and consisting of resistors 34, 35. Mid point 33 therefore presents a temperature-stable voltage $V_2$ (being derived from $V_{REF}$) depending on the division ratio of resistors 34, 35. The collector terminals of transistors 30, 31 are connected to the collector terminals of respective NPN transistors 36, 37 having the base terminals connected together, and the emitter terminals grounded. Transistor 36 is diode-connected, i.e. presents a short-circuited base and collector; while the collector of transistor 37 defines the output terminal 38 of comparator 12.

The output stage consists simply of an NPN transistor 40 with the base terminal connected to comparator output 38, the emitter terminal grounded, and the collector terminal connected to supply $V_{CC}$ via resistor 41, and defining the output terminal 42 of the device, at which is present an output signal $V_o$ indicating the maximum permissible temperature.

The above device operates as follows.

If $V_{BE17}$, $V_{BE18}$ is the base-emitter voltage drop of transistors 17, 18 respectively; $DV_{BE}$ is the voltage drop, equal to ($V_{BE17}$ - $V_{BE18}$), at the terminals of resistor 23; $R_{23}$, $R_{24}$ is the resistance of resistors 23, 24 respectively; and assuming sources 19, 20 supply the same current; this gives:

$$V_1 = 2(R_{24}/R_{23})^*DV_{BE} \qquad (1)$$

and

$$V_{REF} = V_{BE18} + 2(R_{24}/R_{23})^*DV_{BE} \qquad (2)$$

If, with the exception of transistor 17 presenting an emitter area n times greater than that of transistor 18, resistors 17 and 18 are identical (same technology, in adjacent positions, and same doping), this gives:

$$DV_{BE} = V_T^*\ln(n) \qquad (3)$$

Equations (1) and (2) may therefore be expressed as follows:

$$V_1 = 2(R_{24}/R_{23})^*V_T^*\ln(n) \qquad (4)$$

and

$$V_{REF} = V_{BE18} + 2(R_{24}/R_{23})VT^*\ln(n) \qquad (5)$$

with $V_T = KT/q$.

As the base-emitter voltage drop and thermal voltage $V_T$ vary oppositely with temperature, output voltage $V_{REF}$ istherefore temperature-stable (Alan B. Grebene, "Bipolar and MOS Analog Integrated Circuit Design", John Wiley & Sons, pages 206-209), whereas voltage $V_1$, depending directly on $DV_{BE}$, increases steadily with temperature, and regardless of process spread.

The input of comparator 12 receives voltage $V_1$ and voltage $V_2$ according to the equation:

$$V_2 = V_{REF}^*[(R_{35})/(R_{34} + R_{35})].$$

The above values are so selected that, under normal conditions, $V_1$ is greater than $V_2$, in which case, output 38 of the comparator is low; transistor 40 is disabled; and output voltage $V_o$ is high (close to supply voltage $V_{CC}$). As the temperature increases, however, $V_1$, which is proportional to and increases with temperature, eventually equals $V_2$, thus switching output 38 of comparator 12 to high, turning on transistor 40, and switching output voltage $V_o$ to low (close to ground voltage). As shown in the voltage-temperature graph in Fig.3, voltage $V_1$ describes a straight line sloping in relation to the x axis, according to equation (4), while $V_2$ is shown as a straight horizontal line. The point at which the two lines intersect indicates the temperature at which device 10 is switched, and, therefore, at which the maximum permissible temperature signal is generated. The advantages of the Fig.2 device will be clear from the foregoing description. Firstly, the maximum permissible temperature is detected on the basis of a signal (voltage $V_1$ proportional to the difference between the base-emitter voltage drop of transistors 17, 18) which is practically unaffected by the process spread of the base-emitter voltage drop of a bipolar transistor.

Secondly, by virtue of reference voltage $V_2$ and temperature-variable voltage $V_1$ being picked up on the same component (band-gap voltage source 11), any process spreads are mutually compensated, in the sense that the straight lines in Fig.3 are moved simultaneously up or down, with no change in the point of intersection or, hence, the temperature at which the output signal is generated, thus providing for a high degree of operating precision of the device.

Finally, the device is straightforward and compact in design, and provides for troublefree implementation or integration.

To those skilled in the art it will be clear that changes may be made to the device as described and illustrated herein without, however, departing from the scope of the present invention. In particular, the band-gap source may be replaced by other voltage sources, especially those capable of producing a temperature-stable reference voltage as well as a voltage varying steadily with temperature.

**Claims**

1. A thermal protective device (10) comprising means (11-13) for producing an output signal when the temperature reaches a predetermined value; characterised by the fact that said means comprise a reference source (11) for producing a temperature-stable signal ($V_2$); a temperature detecting source (11) for producing a signal ($V_1$) varying steadily with temperature; and a comparator element (12) receiving said temperature-stable and said temperature-variable signals; said temperature detecting source (11) comprising two transistors (17, 18) having base and emitter regions defining respective base-emitter voltage drops ($V_{BE17}$, $V_{BE18}$), and mutually connected emitter terminals; said temperature-variable signal ($V_1$) being proportional to the difference ($DV_{BE}$) in the base-emitter voltage drop of said two transistors (17, 18).

2. A device as claimed in Claim 1, characterised by the fact that said reference source and said temperature detecting source consist of the same voltage source element (11).

3. A device as claimed in Claim 2, characterised by the fact that said voltage source element (11) comprises a band-gap circuit.

4. A device as claimed in Claim 3, wherein said transistors (17, 18) of said band-gap circuit (11) present connected base terminals; characterised by the fact that said band-gap circuit (11) presents a first output terminal (15) connected to said connected base terminals, and a second output terminal (16) connected to a mid point between said connected emitter terminals.

5. A device as claimed in Claim 4, characterised by the fact that said transistors (17, 18) present the collector terminals connected to a first reference potential ($V_{CC}$) line (21) via respective current sources (19, 20); the emitter terminal of a first (18) of said two transistors defining said second output terminal (16); and the emitter terminal of a second (17) of said two transistors being connected to said second output terminal (16) via a first resistor (23); said second output terminal (16) being connected to a second reference potential line (22) via a second resistor (24).

6. A device as claimed in Claim 5, characterised by the fact that said comparator element (12) presents a first input connected to said second output terminal (16) of said source (11), and a second input connected to the mid point (33) of a voltage divider (34, 35) connected between said first output terminal (15) of said source (11) and said second reference potential line (22).

7. A device as claimed in any one of the foregoing Claims from 1 to 6, characterised by the fact that said comparator (12) drives an output stage (13).

8. A thermal protective device comprising means (11-13) for producing an output signal when the temperature reaches a predetermined value; characterised by the fact that said means comprise one voltage source (11) for producing a first temperature-stable voltage ($V_2$) and a second voltage ($V_2$) varying steadily with temperature; and a comparator element (12) receiving said temperature-stable and said temperature-variable voltages; said comparator element (12) producing said output signal when said temperature-stable voltage ($V_2$) and

said variable voltage ($V_1$) are equal.

9. A device as claimed in Claim 8, characterised by the fact that said voltage source (11) is a band-gap type.

10. A device as claimed in Claim 9, characterised by the fact that said voltage source (11) comprises two bipolar transistors (17, 18), each defining a base-emitter junction, and having mutually connected base terminals defining a first output terminal (15) of said source; and collector terminals connected to a first reference potential ($V_{CC}$) line (21) via respective current sources (19, 20); the emitter terminal of a first (18) of said transistors defining a second output terminal (16) of said source (11) and being connected to the emitter terminal of a second (17) of said transistors via a first resistor (23); a second resistor (9) being connected between said second output terminal (16) and a second reference potential line (22).

11. A device as claimed in Claim 10, characterised by the fact that said comparator element (12) presents a first input connected to said second output terminal (16) of said source (11); and a second input connected to the mid point (33) of a voltage divider (34, 35) connected between said first output terminal (15) of said source (11) and said second reference potential line (22).

12. A device as claimed in one of the foregoing Claims from 8 to 10, characterised by the fact that said comparator element (12) drives an output stage (13).

Fig.1

Fig.2

Fig.3

5